# EUROPEAN PATENT APPLICATION

(11) **EP 4 336 699 A1**
(43) Date of publication of application: **13.03.2024**
(21) Application number: 22823901.8
(22) Date of filing: 21.04.2022
(51) Int. Cl.: H02J 7/00

(54) **CHARGING CIRCUIT, CHARGING METHOD, ELECTRONIC DEVICE, AND STORAGE MEDIUM**

(30) Priority: 17.06.2021 CN 202110672804
(71) Applicant: ZTE Corporation, Shenzhen, Guangdong 518057 (CN)
(72) Inventor: YU, Bing, Shenzhen, Guangdong 518057 (CN)
(74) Representative: Zoli, Filippo
(86) International application number: PCT/CN2022/088306
(87) International publication number: WO 2022/262415

(57) **Abstract**

A charging circuit, a charging method, an electronic device, a controller, and a storage medium. The charging circuit comprises: a detection module (110) used for detecting state information of a charge pump charging system; a charging control module (120), the input end of the charging control module (120) being connected to the output end of the detection module (110), and the charging control module (120) being used for outputting a control instruction according to the state information; and a switching module (130) used for receiving the control instruction from the charging control module (120), and switching the charging path of the charge pump charging system.

## Description

### CROSS-REFERENCE TO RELATED APPLICATION

This application is filed on the basis of the Chinese patent application No. 202110672804.6 filed June 17, 2021, and claims priority of the Chinese patent application, the entire contents of which are incorporated herein by reference.

### TECHNICAL FIELD

The present disclosure relates to the technical field of charging, and in particular to a circuit for charging, a method for charging, an electronic device, and a storage medium.

### BACKGROUND

In recent years, smart terminal device users are having great demand on quick charge. In order to achieve higher requirements for quick charge, charge pump charging circuits have emerged, which charge and discharge through one or more groups of capacitors, achieving a scalable rise and fall of voltage and current. Charge pump charging has the advantages of high charging current and high charging efficiency.

Quick charge systems with charge pump charging circuit have fixed charging circuit and charging scheme currently, which is prone to problems such as low charging efficiency and slow charging speed when facing different application scenarios.

### SUMMARY

The following is a summary of the subject matter described herein. This summary is not intended to limit the scope of protection of the claims.

Provided are a method for charging, an electronic device, a controller, and a storage medium in some embodiments of the present disclosure.

According to an aspect of the present disclosure, an embodiment provides a circuit for charging, which includes, a detection module configured to detect state information of a charge pump charging system; a charging control module, having an input end connected with an output end of the detection module, and configured to output a control instruction according to the state information; and a switching module configured to receive the control instruction from the charging control module and to switch a charging path of the charge pump charging system.

According to another aspect of the present disclosure, an embodiment provides a circuit for charging, which includes a high-voltage voltage-divided charging unit having an input end connected with a charger, and an output end configured to charge a batter pack that includes at least two batteries connected in series; and a low-voltage voltage-divided charging unit, having an input end connected to the output end of the high-voltage voltage-divided charging unit, and an output end configured to compensate and charge at least one battery in the battery pack.

According to yet another aspect of the present disclosure, an embodiment provides a system for charging, which includes a battery pack that includes at least two batteries, and any one the circuit for charging as described above, for charging the batteries.

According to yet another embodiment of the present disclosure, an embodiment provides a method for charging, which includes, acquiring state information of a charge pump charging system; and outputting, according to the state information, a corresponding control instruction to switch a charging path of the charge pump charging system.

According to yet another aspect of the present disclosure, an embodiment provides an electronic device, which includes a memory, a processor, and a computer program stored in the memory and executable on the processor which, when is executed by the processor, causes the processor to carry out the method as described above.

According to yet another aspect of the present disclosure, an embodiment provides a computer-readable storage medium storing a computer-executable instruction which, when executed by a processor causes the processor to carry out the method as described above.

### BRIEF DESCRIPTION OF DRAWINGS

In order to illustrate the technical scheme in the embodiments of the present disclosure, the drawings related to the description of the embodiments or related technologies will be briefly introduced below. It is apparent that, the drawings described below are only some embodiments of the present disclosure. Those having ordinary skills in the art can derive other drawings according to these drawings without devoting creative effort.
FIG. 1 depicts a schematic diagram showing a circuit for charging according to an embodiment of the present disclosure;
FIG. 2 depicts a schematic diagram showing a circuit for charging according to another embodiment of the present disclosure;
FIG. 3 depicts a schematic diagram showing a circuit for charging according to yet another embodiment of the present disclosure;
FIG. 4 depicts a schematic diagram showing a circuit for charging according to yet another embodiment of the present disclosure;
FIG. 5 depicts a schematic diagram showing a circuit for charging according to yet another embodiment of the present disclosure;
FIG. 6 depicts a schematic diagram showing a charging system according to an embodiment of the present disclosure;
FIG. 7 depicts a flow chart showing the operation of a charging system according to an embodiment of the present disclosure;
FIG. 8 depicts a flowchart showing a method for charging according to an embodiment of the present disclosure;
FIG. 9 depicts a flowchart showing a method for charging according to another embodiment of the present disclosure;
FIG. 10 depicts a flowchart showing a method for charging according to another embodiment of the present disclosure;
FIG. 11 depicts a flowchart showing a method for charging according to another embodiment of the present disclosure;
FIG. 12 depicts a flowchart showing a method for charging according to another embodiment of the present disclosure; and
FIG. 13 depicts a schematic diagram showing a circuit for charging according to yet another embodiment of the present disclosure.

### DETAILED DESCRIPTION

In the following description, specific details, such as specific system structure and technology, are set forth for the purpose of illustration rather than limitation, for understanding of the embodiments of the present disclosure. However, it should be clear to those having ordinary skills in the art that embodiments of the present disclosure may be practiced in other embodiments that do not have these specific details. In other cases, detailed descriptions of well-known systems, devices, circuits, and methods are omitted so as not to obscure the description of the embodiments of the present disclosure with unnecessary details.

It shall be noted that, in some cases, the steps shown or described may be performed in a different order than the logical order shown in the flowcharts. It should be noted that the terms "first" and "second", if used in the description, the claims and the drawings are intended to distinguish similar objects, and does not necessarily imply any specific order or sequence.

It should also be understood that references to "one embodiment" or "some embodiments" etc. described in the description of some embodiments of the present disclosure mean that specific features, structures or characteristics described in conjunction with this embodiment are included in one or more embodiments of the present disclosure. Thus, the phrases "in one embodiment", "in some embodiments", "in other embodiments" and "in further embodiments" appearing in different places in this description do not necessarily all refer to the same embodiment, but mean "one or more but not all embodiments" unless otherwise emphasized. The terms "include", "contain", "having" and their variations all mean "including but not limited to" unless otherwise specifically emphasized.

In recent years, smart terminal device users are having great demand on quick charge. In order to achieve higher requirements for quick charge, charge pump charging circuits have emerged, which charge and discharge through one or more groups of capacitors, achieving a scalable rise and fall of voltage and current. Charge pump charging has the advantages of high charging current and high charging efficiency. In addition, in the related technical scheme, a battery pack can be designed with two batteries in series, that is, the battery pack is divided into two batteries for charging concurrently, thus improving the charging efficiency.

For example, there are two key types of charge pump charging units, high-voltage voltage-divided charging units (such as 4:2 charging unit, 4:1 charging unit, 9:3 charging unit, or 6:3 charging unit) and low-voltage voltage-divided charging units (such as 2:1 charging unit or 3:1 charging unit). It should be noted that the numbers "M" and "N" in the M:N charging unit respectively indicate the multiples of the input voltage and output voltage of the charging unit relative to the battery voltage. For example, a ratio "4:2" indicates that the input voltage of the charging unit is four times the battery voltage and the output voltage is two times the battery voltage.

High-voltage voltage-divided charging units support a higher upper limit voltage up to the level of about 20 V, for example. These units are generally intended for charging lithium batteries with two series-connected cell through small step voltage regulation. In contrast, low-voltage voltage-divided charging unit supports a lower upper limit voltage up to the level of about 10V, for example. These units are generally intended for charging a lithium battery with one series-connected cell through small step voltage regulation.

There are two main charging systems for smart terminal devices.

One type is a battery of a single-cell structure, in which the battery is charged with a fast charging system by means of a low-voltage voltage-divided charging unit. The advantages are that the conductive impedance of the whole charging path is relatively good and the charging efficiency is relatively high.

The other type is a battery of a serial dual-cell structure, in which the battery is charged with a fast charging system by means of a high-voltage voltage-divided charging unit. The advantage is that the upper limit of charging power is large. Since the battery voltage is high, the battery can't directly supply power to the system load, so the voltage shall be subjected to a step-down processing by a low-voltage voltage-divider first. This process introduces additional line loss and also leads to a complicated charging system architecture.

Quick charge systems with charge pump charging circuit have fixed charging circuit and charging scheme currently. In other words, in the charging systems of related art, the charging scheme and circuit design cannot adapt to the input of a wide voltage range charger and the output of a wide voltage range battery. When encountering different application scenarios, those charging systems are prone to problems such as low charging efficiency and slow charging speed.

For example, in the related art, when a charger that only supports low-voltage charging is employed and connected to a charging system consisting of a high-voltage bi-voltage-divided charging unit and two lithium batteries connected in series, it is not possible to charge with the high-voltage bi-voltage-divided charging unit, and only another BUCK-BOOST charging unit can be employed for charging, which results in reduced efficiency, severe heating, and slower charging speed. For another example, when a charger supporting high-voltage charging is employed and connected to a charging system consisting of a low-voltage bi-voltage-divided charging unit and a single-cell lithium battery, the downward compatibility of the high-voltage charger can be employed only to charge with low voltage. If the charging cable is not a high-power cable (such as a cable supporting current of 3A), then the total charging power can't be raised since the current can't be raised, and the charging speed can't reach the optimal level.

In view of this, the present disclosure provides a circuit for charging, a charging system, a method for charging, an electronic device, and a storage medium in some embodiments. According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

It should be noted that the smart terminal device can be a mobile terminal device or a non-mobile terminal device. Mobile terminal devices can be mobile phones, tablet computers, notebook computers, palmtop computers, vehicle-mounted terminal devices, wearable devices, super mobile personal computers, netbooks, personal digital assistants, Customer Premise Equipment (CPE), UFI (a Wireless Hotspot Equipment), etc. Non-mobile terminal devices can be personal computers, televisions, teller machines or self-service machines. The present disclosure is not limited thereto. A smart terminal device may include a battery pack that may include a plurality of cells (batteries). For example, the battery pack can include two cells, three cells, four cells, etc.

In some embodiments, when the battery pack includes dual cells, the high-voltage voltage-divided charging unit can adopt a 4:2 charging unit or a 4:1 charging unit, while the low-voltage voltage-divided charging unit can adopt a 2:1 charging unit. When the battery pack includes triple cells, the high-voltage voltage-divided charging unit can adopt a 9:3 charging unit or a 6:3 charging unit, while the low-voltage voltage-divided charging unit can adopt a 3:1 charging unit. The situation for multiple cells can be similar. It should be noted that the numbers "M" and "N" in the M:N charging unit respectively indicate the multiples of the input voltage and output voltage of the charging unit relative to the battery voltage. For example, a ratio "4:2" indicates that the input voltage of the charging unit is four times the battery voltage and the output voltage is two times the battery voltage. For the convenience of illustration, following embodiments will be illustrated with a battery pack including dual cells only, by way of example, the situation for triple cells or quad cells can be similar, and which thus are not repeated here. Some embodiments of the present disclosure will be further illustrated with reference to the drawings.

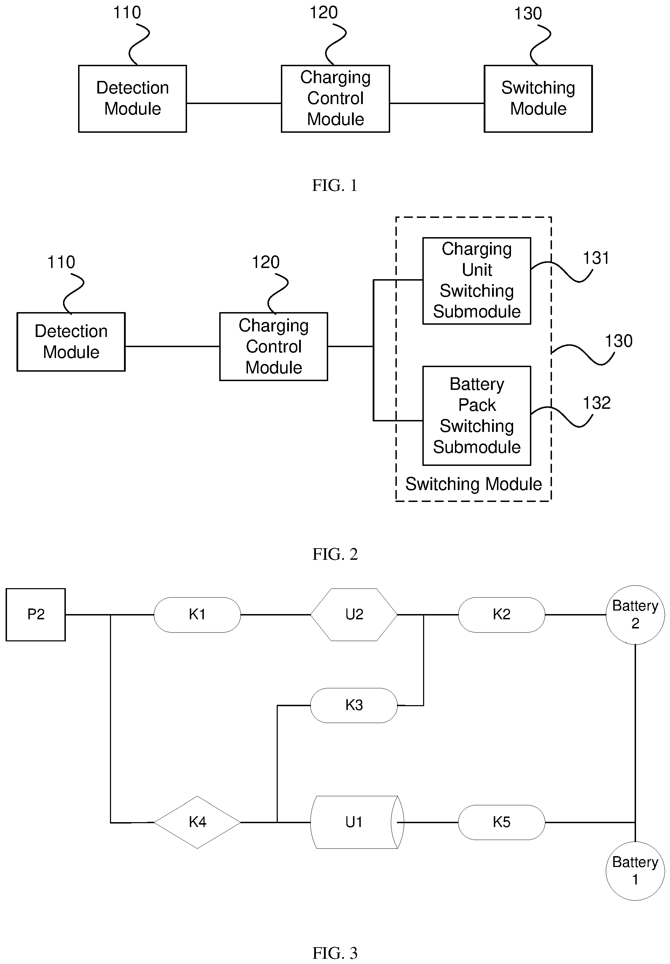

FIG. 1 shows a circuit for charging 100 that includes, a detection module 110 configured to detect state information of a charge pump charging system; a charging control module 120 having an input end connected with an output end of the detection module 110, where the charging control module 120 is configured to output a control instruction according to the state information; and a switching module 130 configured to receive the control instruction from the charging control module 120 and to switch a charging path of the charge pump charging system.

In some embodiments, the circuit for charging 100 may be a circuit built within the smart terminal device or an external circuit to the smart terminal device. For example, the circuit for charging100 can be built into a smart terminal device and connected with an external charger 200 through a charging interface (such as a Type-C charging interface).

In some embodiments, the circuit for charging 100 is a charge pump charging circuit having a charge pump charging module (such as a high voltage divided charging module, a low voltage divided charging module, etc.). The circuit for charging 100 can be applied to a charge pump charging system. The charge pump charging system is a charging system having a charge pump charging circuit. The charging path of the charge pump charging system can be switched, that is, the charging path of the charge pump charging system can be switched by switching the charging path of charge pump charging circuit. In some embodiments, the charge pump charging system includes a charger, a circuit for charging and a battery pack successively connected with each other, where the battery pack includes at least two batteries e.g., a first cell, Battery 1 and a second cell, Battery 2 in the following embodiments).

In some embodiments, the circuit for charging 100 in an embodiment of the present disclosure includes a detection module 110, a charging control module 120, and a switching module 130.

The detection module 110 is configured to detect state information of the charge pump charging system, such as a charging input voltage, current, cable type, battery pack voltage, charging and discharging current, etc. In some embodiments, when the charger 200 is plugged in, that is, when the charger 200 establishes a connection with the circuit for charging 100, the detection module 110 can be triggered to detect the state information.

The charging control module 120 has an input end connected with an output end of the detection module 110, and the charging control module 120 is configured to output a control instruction based on the state information. For example, the charging control module 120 provides the switching module 130 with the control signal further based on the voltage value reported by the input/output detection module 110. In some embodiments, the charging control module can be implemented in a processor that can include one or more processing units, and different processing units can be independent devices or integrated in one or more processors.

The switching module 130 has an input end connected with an output end of the charging control module 120, and is configured to receive the control instruction from the charging control module 120 and to switch the charging path of the charge pump charging system. The switching module 130 is connected with the battery pack for charging the battery pack.

In some embodiments, the charge pump charging system is a system including a circuit for charging 100 of a charge pump charging unit. For the problem in the related art that the charge pump charging system cannot adapt to the input of the wide-voltage range charger 200 and the output of the wide-voltage range battery, an embodiment of the present disclosure can make corresponding circuit switching according to the change of the charging system state, and select a better charging path and charging scheme to complete charging, so as to better meet the user requirements of fast charging and high charging efficiency.

For example, in the related art, when a charger 200 that only supports low-voltage charging is employed and connected to a charging system consisting of a high-voltage bi-voltage-divided charging unit and two lithium batteries connected in series, only another BUCK-BOOST charging unit can be activated for charging, which results in reduced efficiency, severe heating, and slower charging speed. In an embodiment of the present disclosure, the detection module 110 can detect the state information of the charge pump charging system. In case that the detected state information indicates a low-voltage charger P1, the charging control module 120 can output a control instruction to control the switching module 130 according to the state information. The switching module 130, upon receiving the control instruction, switches the charging path of the charge pump charging system. For example, the charging unit can be set as a low-voltage bi-voltage-divided charging unit by means of the charging unit switching submodule 131. Meanwhile, the battery pack switching submodule 132 is employed to change the battery cells connected in series into battery cells connected in parallel. At this time, the charging unit is switched to the low-voltage bi-voltage-divided charging scheme, so that the charger 200 which only supports low-voltage charging can still provide quick charging with bi-voltage-divided scheme.

For another example, in the related art, when a charger 200 supporting high-voltage charging is employed and connected to a charging system consisting of a low-voltage bi-voltage-divided charging unit and a single-cell lithium battery, the downward compatibility of the charger 200 can be employed only to charge with low voltage. If the charging cable is not a high-power cable (such as a cable supporting current of 3A), then the total charging power can't be raised since the current can't be raised, and the charging speed can't reach the optimal level. In an embodiment of the present disclosure, the detection module 110 is enabled to detect the state information of the charge pump charging system, and output a control instruction to control the switching module 130 based on the state information, so that the charging scheme can be switched between the low voltage bi-voltage-divided scheme and the high voltage bi-voltage-divided scheme. The control of the switching can also be determined based on the power consumption of the system load. For example, when the power consumption of the system load is low, the battery pack switching submodule 132 can be set as a dual-cell series connection scheme, so that the power can be raised as much as possible due to high-voltage charging, even if the cable current cannot be raised under the high-voltage bi-voltage-divided scheme. Due to the light load, the voltage rising speed of the two batteries (cells) is almost the same, and charging can be held at a high voltage for a long time before one of the batteries is fully charged. On the contrary, if the power consumption of the system load is heavy, charging can be held under a high voltage until one battery is fully charged, and then the battery pack switching submodule 132 is employed to switch to the parallel connection scheme of dual cells to continue charging.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

In some embodiments, the status information includes at least one of, type of charger, type of charging cable, power consumption of load, or state of battery voltage.

In some embodiments, the detection module 110 may be communicatively connected with the charger 200 and obtains the charger type, and also detects and transmits the charging input voltage and current to the charging control module 120 as the status information. For example, it can be detected that the charger is of the type of a low-voltage charger P1 or a high-voltage charger P2. In some embodiments, the output voltage of the low-voltage charger P1 is within the range of 3V-11V, and the output voltage of the high-voltage charger P2 is within the range of 3V-20V. In some embodiments, the detection module 110 can be integrated with the charging control module 120 in one processor to detect the type of the charger.

In some embodiments, the charging cable is of the type including a low-power charging cable and a high-power charging cable. For example, when the charging cable is a standard Type-C charging cable and the connected Type-C interface has 24 pins, the detection module 110 can identify the type of the charging cable by reading the information of the A5 pin CC1 and the B5 pin CC2.

In some embodiments, the load power consumption includes low power consumption and high power consumption. For example, the detection module 110 can compare the detected power consumption with a preset power consumption threshold to determine whether the load power consumption is low power consumption or high power consumption. In some embodiments, the detection module includes a power sensor, which can be employed to test the system power consumption.

In some embodiments, the battery voltage state can be the current value of battery voltage, and can also be state where the battery is fully charged or not fully charged. The detection module 110 can detect the voltage of each battery (cell). In some embodiments, the detection module includes a current/voltage detection submodule, which can be employed to test and acquire the battery voltage state. In some other embodiments, the detection module can directly acquire the battery voltage information through connecting with a control chip of a smart terminal device (such as a mobile phone).

Referring to FIG. 2, in some embodiments, the switching module 130 includes at least one of, a charging unit switching submodule 131 having an input end connected with an output end of the charging control module 120, for switching the connection path of the charging unit according to the control instruction; or a battery pack switching submodule 132 having an input end connected with the output end of the charging control module 120, for switching the connection scheme of the battery according to the control instruction.

In some embodiments, the charging unit switching submodule 131 includes a plurality of different types of charging units for voltage conversion; and a plurality of switches, in which one end of a switch is connected with the charger 200 with the other end connected with the charging unit, or the switches are connected between different types of charging units, or one end of a switch is connected with the charging unit with the other end connected with the battery; the control end of a switch is connected with the output end of the charging control module 120, for switching the on-off state according to the control instruction from the charging control module 120, so as to switch the connection path of the charging unit(s).

In some embodiments, the different types of charging units can include a high-voltage bi-voltage-divided charging unit, a low-voltage bi-voltage-divided charging unit U1, a high-voltage quarter-voltage-divided charging unit, a low-voltage Buck charging unit, or the like. In some embodiments, the high-voltage bi-voltage-divided charging unit, the low-voltage bi-voltage-divided charging unit U1 and the high-voltage quarter-voltage-divided charging unit can all be implemented by means of charge pump charging chips. In particular, the high-voltage bi-voltage-divided charging unit is a 4:2 charging unit, and the input voltage of the charging unit is 4 times of the battery voltage, and the output voltage is 2 times of the battery voltage. The low-voltage bi-voltage-divided charging unit is a 2:1 charging unit, and the input voltage of the charging unit is 2 times of the battery voltage, and the output voltage is 1 times of the battery voltage. The high-voltage quarter-voltage-divided charging unit is a 4:1 charging unit, and the input voltage of the charging unit is 4 times of the battery voltage, and the output voltage is 1 times of the battery voltage. The low voltage Buck charging unit is a charging unit for standard charging (non-quick charging). For example, for a non-Programmable Power Supply (PPS) charger 200, the low-voltage Buck charging unit can be switched to for charging. Alternatively, the low-voltage Buck charging unit can be switched to for charging after the charging starts or before the charging ends.

In some embodiments, the battery pack switching submodule 132 is composed of a series-parallel switching circuit, and is configured to switch the connection scheme of the batteries in the battery pack. In some embodiments, the battery pack switching submodule 132 is configured to switch the connection scheme of the batteries (cells) to serial connection or parallel connection according to the control instruction.

In some embodiments, the switch can be a thyristor, a transistor, a field-effect transistor, a silicon controlled rectifier (SCR), a relay, or the like.

Referring to FIGS. 3, 4 and 5, in some embodiments, the plurality of different types of charging units include a low-voltage voltage-divided charging unit U1 and a high-voltage voltage-divided charging unit U2. The plurality of switches include a first switch K1, a second switch K2, a third switch K3, a fourth switch K4 and a fifth switch K5.

The first switch K1 has an end connected with the charger 200, and has another end connected with an input end of the high-voltage voltage-divided charging unit U2. The second switch K2 has an end connected with an output end of the high-voltage voltage-divided charging unit U2, and has another end connected with a battery. The third switch K3 is connected between the output end of the high-voltage voltage-divided charging unit U2 and an input end of the low-voltage voltage-divided charging unit U1. The fourth switch K4 has an end connected with the charger 200, and has another end connected with the input end of the low-voltage voltage-divided charging unit U1. The fifth switch K5 has an end connected with an output end of the low-voltage voltage-divided charging unit U1, and has another end connected with a battery. By switching the on-off states of a plurality of switches, the connection path of the charging unit is switched.

For example, in some embodiments, the charging control module 120 can determine the type of the charger according to the status information. When the charger is of the type of a low-voltage charger P1, a control instruction is output to switch the charging path of the charge pump charging system to the charging path (1) where the charging is performed by means of a low-voltage bi-voltage-divided charging unit; and the batteries are connected in parallel. When the charger is of the type of a high-voltage charger P2, the type of the charging cable is determined according to the status information. When the charging cable is of the type of a high-power cable, a control instruction is output to switch the charging path of the charge pump charging system to a charging path (2) where the charging is performed by means of a low-voltage voltage-divided charging unit U1; and the batteries are connected in parallel. When the charging cable is of the type of a low power cable, the power consumption of the load is determined according to the state information. When the power consumption of the load is low, the control instruction is output to switch the charging path of the charge pump charging system to charging path (3-1) or charging path (3-2). In charging path (3-1), the charging is performed by means of a high-voltage voltage-divided charging unit U2; the batteries are connected in series; low-voltage voltage-divided charging unit U1 is employed to compensate and charge the battery that supplies power to the load. In charging path (3-2), the charging is performed by means of a high-voltage voltage-divided charging unit U2; the batteries are connected in series; a voltage of battery is determined based on the state information; low-voltage voltage-divided charging unit U1 is employed, based on the voltage of battery, to compensate and charge the battery that supplies power to the load. When the charging cable is of the type of a low power cable, the power consumption of the load is determined according to the state information. When the power consumption of the load is high, a control instruction is output to switch the charging path of the charge pump charging system to the charging path (4-1) or the charging path (4-2). In charging path (4-1), the charging is performed such that, the batteries are charged through the high-voltage voltage-divided charging unit U2 and the low-voltage divided charging unit U1 in sequence; the batteries are connected in parallel. In charging path (4-2), the charging is performed by means of a high-voltage voltage-divided charging unit U2; the batteries are connected in series; a voltage of battery is determined according to the state information; the batteries are charged through a high-voltage voltage-divided charging unit U2 and a low-voltage voltage-divided charging unit U1 in sequence; the battery are connected in parallel.

The following three charging schemes are provided by way of example to illustrate the concept of the present disclosure.

In some embodiments, the charging system employs a high-voltage bi-voltage-divided charging unit to charge two batteries connected in series, the current of the system load is provided by a first cell, Battery 1. Especially, the greater the power consumption of the system load, the more the lowering of voltage of the first cell Battery 1 compared to that of the second cell Battery 2, as the voltage of the battery pack increases, resulting in that the time at which the second cell, Battery 2 is fully charged is earlier than the time at which the first cell, Battery 1 is fully charged, in the battery pack. The charging system according to an embodiment of the present disclosure can have several forms of optimizations.

### EMBODIMENT ONE

FIG. 3 shows a case where the charger 200 is a high-voltage charger P2, and the charging cable employed is of the type of a low-power cable, such as a 3A current cable. In such a case, the series connection of the dual cells be kept unchanged, and the high-voltage bi-voltage-divided charging unit is employed for charging, which has the advantage of high charging power. Meanwhile, the third switch K3 and the fifth switch K5 are activated, such that the first cell, Battery 1 (the cell that supplies power to the load) is compensated and charged by the low-voltage bi-voltage-divided charging unit. As a consequence, the synchronization of rises in voltages of the first cell, Battery1 and the second cell, Battery2 is kept to the most extent, such that the charging speed is not affected by the power consumption of the system load and the optimized charging speed is achieved. The charging scheme is shown in FIG. 3, in which, the first switch K1, the second switch K2, the third switch K3, and the fifth switch K5 are activated, the fourth switch K4 is deactivated; the first cell, Battery 1 and the second cell, Battery 2 are connected in series. The charger 200, the first switch K1, the high-voltage voltage-divided charging unit U2, the second switch K2, the second cell, Battery2 and the first cell, Battery1 are sequentially connected in series to form a high-voltage charging path. The output from the output end of the high-voltage bi-voltage-divided charging unit U2 sequentially passes through the third switch K3, the low-voltage bi-voltage-divided charging unit U1, the fifth switch K5 and the first cell, Battery 1 to compensate and charge the first cell, Battery 1.

### EMBODIMENT TWO

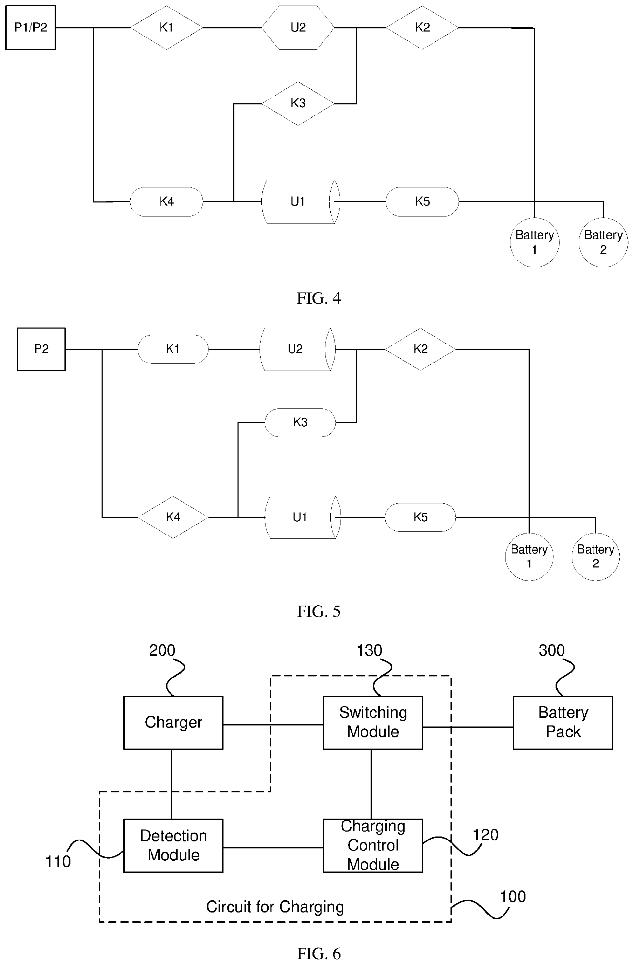

FIG. 4 shows a case where the charger 200 is a low-voltage charger P1, and the charging cable employed is of the type of a high-power cable, such as, a 5-6A current cable. In such a case, the charging scheme can be switched to a low-voltage bi-voltage-divided charging unit can be switched to for charging, since the input current is not limited by the power limit of the charging cable. The dual-cell parallel connection scheme can be switched to, at which case the first cell, Battery 1 and the second cell, Battery 2 are connected in parallel. The input current is automatically distributed between the first cell, Battery 1 and the second cell, Battery 2, and the voltages of the first cell, Battery 1 and the second cell, Battery 2 rise synchronously, thus ensuring the charging power is in a good state. Due to the downward compatibility of high-voltage charger P2 and the provision of low-voltage output, this charging scheme is also suitable for high-voltage charger P2. The charging scheme is shown in FIG. 4, in which, the first switch K1, the second switch K2 and the third switch K3 are deactivated, the fourth switch K4 and the fifth switch K5 are activated. The first cell, Battery1 and the second cell, Battery 2 are connected in parallel. The charger 200, the fourth switch K4, the low-voltage voltage-divided charging unit U1 and the fifth switch K5 are connected in series and in sequence to form the low-voltage circuit for charging 100.

### EMBODIMENT THREE

FIG. 5 shows a case where the charger 200 is a high-voltage charger P2, and the charging cable employed is of the type of a low-power cable, such as, a 3A current cable. A charging scheme in which a high-voltage bi-voltage-divided charging unit and a low-voltage bi-voltage-divided charging unit are connected in series can be switched to. Alternatively, a charging scheme in which a high-voltage quarter-voltage-divided charging unit is charging (not shown in the figures) can be switched to, and the connection of the battery pack is switched to dual cells connected in parallel. Although the first cell, Battery 1 and the second cell, Battery 2 are connected in parallel, high-voltage input can still be utilized to expand the current entering the batteries as much as possible, thus ensuring that the charging power is also in a good state. The charging scheme is shown in FIG. 5, in which, the first switch K1, the third switch K3, and the fifth switch K5 are activated, and the second switch K2 and the fourth switch K4 are deactivated. The first cell, Battery 1 and the second cell, Battery 2 are connected in parallel. The charger 200, the first switch K1, the high-voltage voltage-divided charging unit U2, the third switch K3, the low-voltage voltage-divided charging unit U1 and the fifth switch K5 are sequentially connected in series to form a high-voltage charging path.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

In addition, an embodiment of the present disclosure can self-adapt to the input of the wide voltage range charger 200 and the output of the wide voltage range battery. For example, the charger 200 can support both low voltage and high voltage. The battery cells can be connected in parallel (corresponding to low output charging voltage state) or connected in series (corresponding to high output charging voltage state).

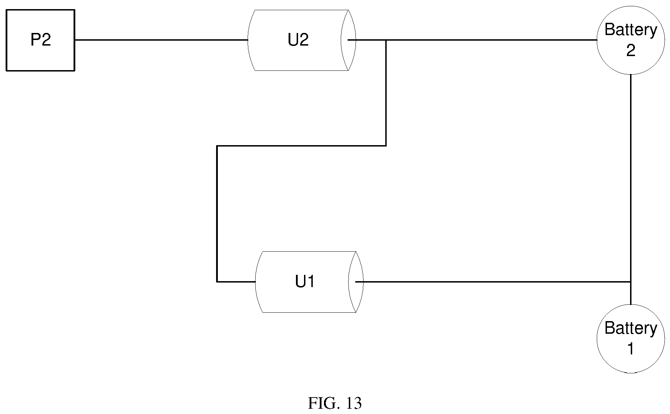

Referring to FIG. 13, an embodiment of the present disclosure provides a circuit for charging, which includes a high-voltage voltage-divided charging unit U2 having an input end connected with a charger P2, and an output end configured to charge a batter pack that includes at least two batteries connected in series; and a low-voltage voltage-divided charging unit U1 having an input end connected to the output end of the high-voltage voltage-divided charging unit U2, and an output end configured to compensate and charge at least one battery in the battery pack.

It should be noted that the battery pack may include at least two cells (batteries), namely a first cell, Battery 1 and a second cell, Battery 2. It is apparent that, the battery pack can also include dual cells, triple cells or quad cells, etc. For the convenience of description, following embodiments will be illustrated with a battery pack including dual cells only, by way of example, the situation for triple cells or quad cells can be similar, and which thus are not repeated here.

Referring to FIG. 13, in the case that, the high-voltage voltage-divided charging unit U2 is connected with the dual cells in series, the current to the system load is supplied by a first cell, Battery 1. In such a case, the greater the power consumption of the system load, the more the lowering of voltage of the first cell Battery 1 compared to that of the second cell Battery 2, as the voltage of the battery pack increases, resulting in that the time at which the second cell, Battery 2 is fully charged is earlier than the time at which the first cell, Battery 1 is fully charged, in the battery pack. To this end, the high-voltage voltage-divided charging unit U2 can be employed to charge. And the battery (the first cell, Battery 1) that supplies power to the load is compensated and charged by the low-voltage voltage-divided charging unit U1.

In some embodiments where the charger P2 is a high-voltage charger P2, and the charging cable employed is of the type of a low-power cable, such as a 3A current cable, then the series connection of the dual cells be kept unchanged, and the high-voltage bi-voltage-divided charging unit (i.e., high-voltage voltage-divided charging unit U2) is employed for charging, which has the advantage of high charging power. Meanwhile, the low-voltage bi-voltage-divided charging unit is employed to compensate and charge the first cell, Battery 1 (the cell that supplies power to the load). As a consequence, the synchronization of rises in voltages of the first cell, Battery 1 and the second cell, Battery 2 is kept to the most extent, such that the charging speed is not affected by the power consumption of the system load and the optimized charging speed is achieved. The charging scheme is shown in FIG. 13, in which the first cell, Battery 1 and the second cell, Battery 2 are connected in series. The charger P2, the high-voltage voltage-divided charging unit U2, the second cell, Battery 2, and the first cell, Battery 1 are sequentially connected in series to form a high-voltage charging path. The output from the output end of the high-voltage bi-voltage-divided charging unit sequentially passes through the low-voltage bi-voltage-divided charging unit U1 and the first cell, Battery 1 to compensate and charge the first cell, Battery 1, so as to better meet the user's demand for fast charging speed and high charging efficiency.

As shown in FIG. 6, an embodiment of the present disclosure provides a charging system, which includes a battery pack 300 that includes at least two batteries; and the circuit for charging 100, as described above, for charging the batteries. For example, the circuit for charging 100 is the circuit for charging 100 of the embodiment shown in FIG. 1 or FIG. 2.

In some embodiments, both the circuit for charging 100 and the battery pack 300 can be built into a smart terminal device.

In some embodiments, the charging system is a charge pump charging system. The charge pump charging system is a charging system having a charge pump charging circuit with a charge pump charging module (such as a high-voltage voltage-divided charging module, a low-voltage voltage-divided charging module, etc.). The charging path of the charge pump charging system can be switched, that is, the charging path of the charge pump charging system can be switched by switching the charging path of charge pump charging circuit. In some embodiments, the charge pump charging system includes a charger 200, a circuit for charging 100 and a battery pack 300 connected in sequence with each other, where the battery pack 300 includes at least two batteries (cells). The input end of the detection module 110 in the circuit for charging 100 is connected with an output end of the charger 200. The input end of the switching module 130 in the circuit for charging 100 is connected with the output end of the charger 200. The output end of the switching module 130 in the circuit for charging 100 is connected with the input end of the battery pack.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

In some embodiments, a charging system further includes a charger 200 having an output end connected with an input end of a circuit for charging 100.

In some embodiments, the charger 200 may be a Programmable Power Supply (PPS) charger 200. The charger 200 is connected to the circuit for charging 100 through a charging cable.

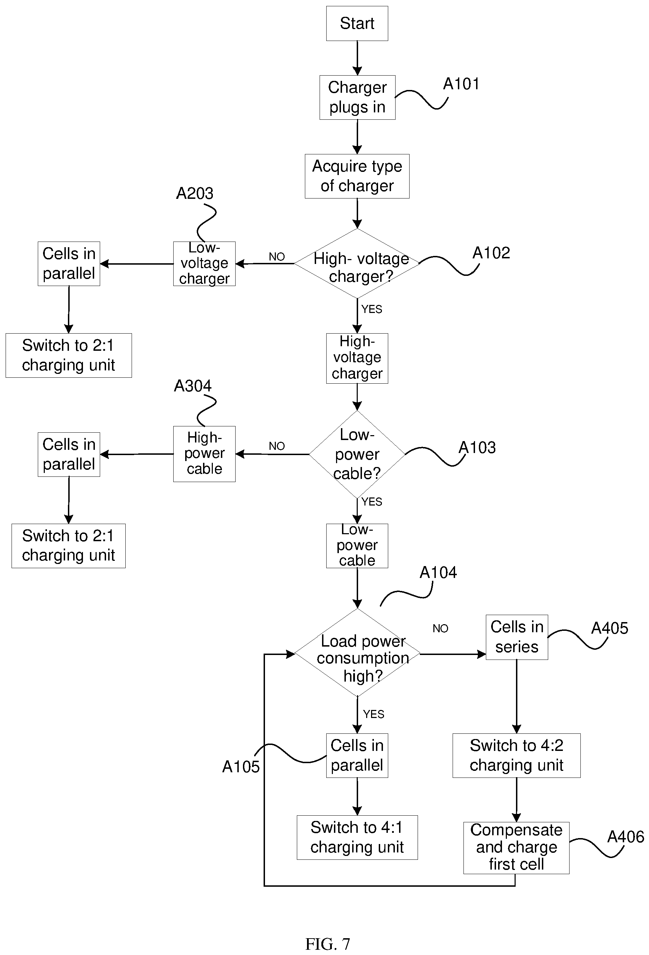

As shown in FIG. 7, in some embodiments, the operation flow of the charging system includes the following operations A101 through A406.

At A101, a charger is plugged in and a charging capacity of the charger is read. For example, a circuit for charging can detect the type of the charger through a detection module.

At A102, a determination is performed as to whether the charger is a high-voltage charger. In some embodiments, a first type of charger is a low-voltage charger and a second type of charger is a high-voltage charger.

At A103, in response to a determination that the charger is of the type of a high-voltage charger, a type of a charging cable is determined by the detection module (whether the cable is a low-power cable or not).

At A203, in response to a determination that the charger is of the type of a low-voltage charger, the charging switching unit module and the battery pack switching submodule are operated by the charging control module, and the charging is switched to a 2:1 charging unit (low-voltage bi-voltage-divided charging unit), and the connection of the batteries are switched to a parallel connection.

At A104, in response to a determination that the charging cable is of the type of a low-power cable, a magnitude of power consumption of load is determined by the detection module (whether the power consumption of load is high or not).

At A304, in response to a determination that the charging cable is of the type of a high-power cable, the charging unit switching submodule and the battery pack switching submodule are operated by the charging control module, and the connection of the cells is switched to a parallel connection, and the charging unit is switched to a 2:1 unit (low-voltage bi-voltage-divided charging unit).

At A105, in response to a determination that the power consumption of the load is high, the charging unit switching submodule and the battery pack switching submodule are operated by the charging control module, and the connection of the cells is switched to parallel connection, and the charging unit is switched to a 4:1 unit (high-voltage quarter-voltage-divided charging unit).

At A405, in response to a determination that the power consumption of the load is low, the charging unit switching submodule and the battery pack switching submodule are operated by the charging control module, and the connection of the cells is switched to series connection, and the charging unit is switched to a 4:2 unit (high-voltage bi-voltage-divided charging unit).

At A406, the voltage of the first cell (the cell supplying power to the load) is determined by the detection module, and the first cell is compensated and charged synchronously by the 2:1 charging unit (the low-voltage bi-voltage-divided charging unit). Operation A104 can also be repeatedly performed to dynamically adjust the charging path.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

It shall be noted that, the system architecture and application scenarios described in an embodiment of the present disclosure are intended for better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It can be understood by those having ordinary skills in the art that the system architecture shown in FIGS. 1, 2 or 6 does not constitute a limitation to the embodiment of the present disclosure, and may include more or less components than those shown, or some components may be combined, or have different arrangements of components.

In the system architecture shown in FIG. 1, FIG. 2 or FIG. 6, the charging control module can respectively call the charging program stored thereon to perform the method for charging.

The method for charging according to an embodiment of the present disclosure can be carried out by a processor that can include one or more processing units. Different processing units can be independent devices or integrated in one or more devices.

Based on the above system architecture, various embodiments of the method for charging of the present disclosure are proposed.

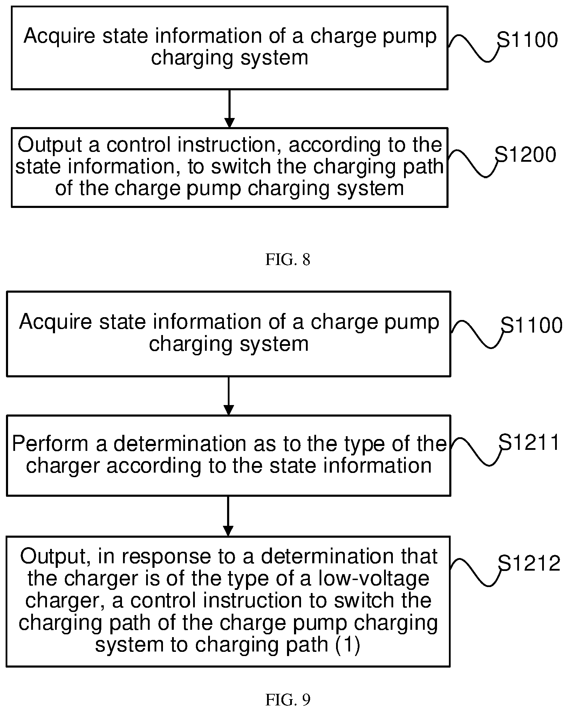

FIG. 8 depicts a method for charging, which includes, operation S1100 at which, state information of a charge pump charging system is acquired. In some embodiments, the status information includes at least one of, type of charger, type of charging cable, power consumption of load, state of battery voltage, etc.

In some embodiments, state information can be obtained from the detection module. The detection module can obtain the state information by detecting the charging input voltage, current, cable type, battery pack voltage, charging and discharging current, etc.

In some embodiments, the detection module may be communicatively connected with the charger and obtains the type of the charger, and further detects and transmits the charging input voltage and current to the charging control module as the status information. For example, it can be detected that the charger is of the type of a low-voltage charger or a high-voltage charger. In some embodiments, the output voltage of the low-voltage charger is within the range of 3V-11V, and the output voltage of the high-voltage charger is within the range of 3V-20V. In some embodiments, the detection module can be integrated with the charging control module in one processor to detect the type of the charger. In some embodiments, when the charger is plugged in, that is, when the charger establishes a connection with the circuit for charging, the detection module can be triggered to detect the state information, such that the charging control module can acquire the state information of the charge pump charging system.

In some embodiments, the charging cable is of the type including a low-power charging cable and a high-power charging cable. For example, when the charging cable is a standard Type-C charging cable and the connected Type-C interface has 24 pins, the detection module can identify the type of the charging cable by reading the information of the A5 pin CC1 and the B5 pin CC2.

In some embodiments, the load power consumption includes low power consumption and high power consumption. For example, the detection module can compare the detected power consumption with a preset power consumption threshold to determine whether the load power consumption is low power consumption or high power consumption. In some embodiments, the detection module includes a power sensor, which can be employed to test and obtain the system power consumption.

In some embodiments, the state of battery voltage can be the current value of battery voltage, and can also be state where the battery is fully charged or not fully charged. The detection module can detect the voltage of each battery (cell).

At S1200, a control instruction is output, according to the state information, to switch the charging path of the charge pump charging system.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

In some embodiments, the status information includes at least one of, type of charger, type of charging cable, power consumption of load, or state of battery voltage.

Switching the charging path of the charge pump charging system includes switching the connection path of the charging unit and/or switching the connection scheme of the batteries.

The charger can be of the types including, a low-voltage charger and a high-voltage charger. The charging cable can be of the types including a low-power charging cable and a high-power charging cable. Power consumption of the load includes low power consumption and high power consumption.

The charging unit includes a low-voltage voltage-divided charging unit and a high-voltage voltage-divided charging unit.

The batteries can be connected in series or in parallel.

In some embodiments, referring to FIG. 9, outputting a control instruction to switch the charging path of the charge pump charging system according to the state information includes operations S1211 and S1212. At S1211, a determination is performed as to the type of the charger according to the state information. At S1212, in response to a determination that the charger is of the type of a low-voltage charger, a control instruction is output to switch the charging path of the charge pump charging system to charging path (1) in which, charging is performed by means of a low-voltage voltage-divided charging unit; and the batteries are connected in parallel.

In some embodiments, the battery pack includes two batteries, and the low-voltage voltage-divided charging unit is a low-voltage bi-voltage-divided charging unit (2:1 charging unit). When the charger is of the type of a low-voltage charger, the parallel batteries are charged by the low-voltage bi-voltage-divided charging unit, so as to raise the charging current and automatically distribute the charging current between the two batteries.

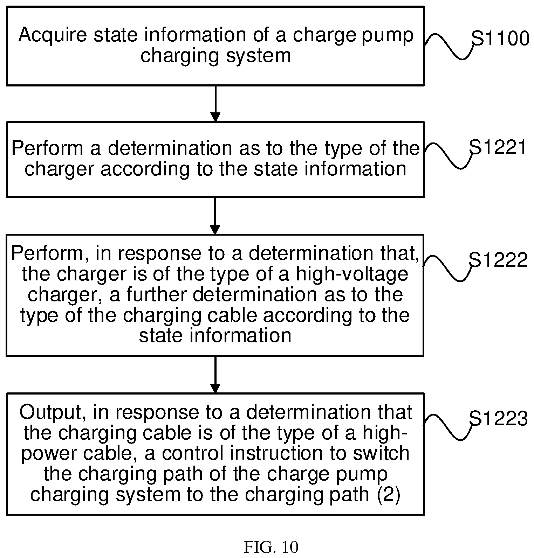

In some embodiments, referring to FIG. 10, outputting a control instruction to switch the charging path of the charge pump charging system according to the state information includes operations S1221 to S1223. At S1221, a determination is performed as to the type of the charger according to the state information. At S1222, in response to a determination that, the charger is of the type of a high-voltage charger, performing a further determination as to the type of the charging cable according to the state information. At S1223, in response to a determination that the charging cable is of the type of a high-power cable, a control instruction is output to switch the charging path of the charge pump charging system to the charging path (2) where the charging is performed by means of a low-voltage voltage-divided charging unit; and the batteries are connected in parallel.

In some embodiments, the battery pack includes two batteries, and the low-voltage voltage-divided charging unit is a low-voltage bi-voltage-divided charging unit (2:1 charging unit). In response to a determination that the charger is of the type of a high-voltage charger, operation S1222 is performed to further determine the type of charging cable; and in response to a determination that the charging cable is of the type of a high-power cable, the parallel batteries are charged by the low-voltage bi-voltage-divided charging unit to raise the charging current and automatically distribute the charging current between the two batteries.

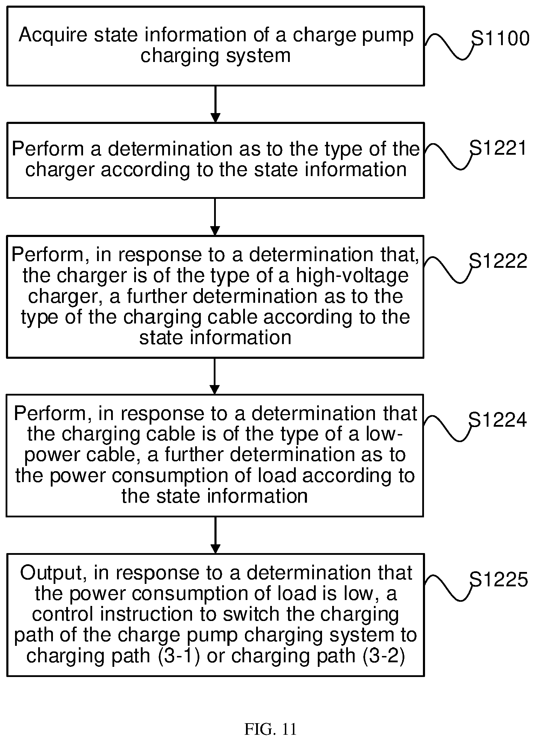

In some embodiments, referring to FIG. 11, after determining the type of the charging cable according to the state information, the method further includes operations S1224 and S1225. At S1224, in response to a determination that the charging cable is of the type of a low-power cable, performing a further determination as to the power consumption of load according to the state information. At S1225, in response to a determination that the power consumption of load is low, a control instruction is output to switch the charging path of the charge pump charging system to charging path (3-1) or charging path (3-2).

In charging path (3-1), the charging is performed by means of a high-voltage voltage-divided charging unit; the batteries are connected in series; low-voltage voltage-divided charging unit is employed to compensate and charge the battery that supplies power to the load.

In charging path (3-2), the charging is performed by means of a high-voltage voltage-divided charging unit; the batteries are connected in series; a voltage of battery is determined based on the state information; low-voltage voltage-divided charging unit is employed, based on the voltage of battery, to compensate and charge the battery that supplies power to the load.

In some embodiments, the battery pack includes two batteries, the low-voltage voltage-divided charging unit is a low-voltage bi-voltage-divided charging unit (2:1 charging unit), and the high-voltage voltage-divided charging unit is a high-voltage bi-voltage-divided charging unit (4:2 charging unit). In response to a determination that the charger is of the type of a high-voltage charger and the charging cable is of the type of a low-power cable, S1224 is performed to further determine the power consumption of the load; and in response to the power consumption of the load is low, the charging path (3-1) is switched to, in which, the batteries in series connection are charged through the high-voltage bi-voltage-divided charging unit and meanwhile, the low-voltage voltage-divided charging unit is employed to compensate and charge the battery supplying power to the load, to improve the charging efficiency and speed. Alternatively, charging path (3-2) is switched to, in which, the high-voltage bi-voltage-divided charging unit is employed to charge the batteries connected in series, and at the same time the voltages of the batteries are detected; in response to a satisfaction of the voltage of the first battery or the second battery with a first preset condition (such as below a predetermined threshold), the low-voltage voltage-divided charging unit is employed to compensate and charge the battery supplying power to the load, to improve the charging efficiency and speed.

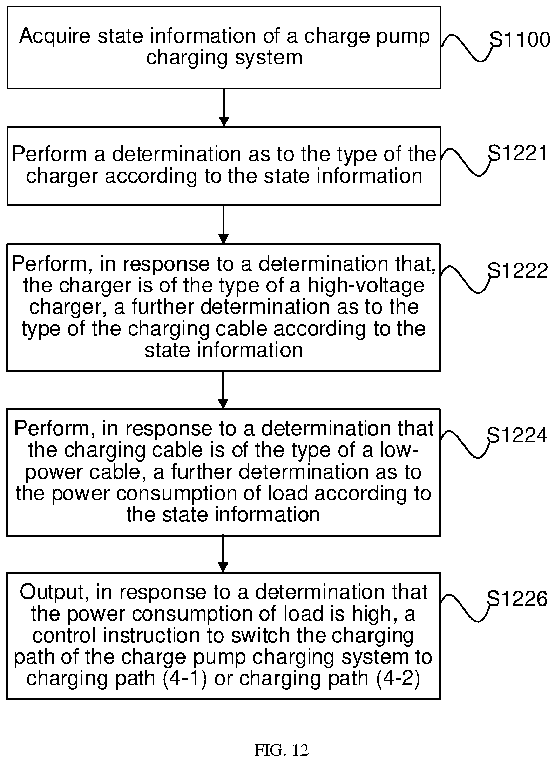

In some embodiments, referring to FIG. 12, after determining the type of the charging cable according to the state information, the method further includes operations S1224 and S1226. At S1224, in response to a determination that the charging cable is of the type of a low-power cable, performing a further determination as to the power consumption of load according to the state information. At S1226, in response to a determination that the power consumption of load is high, a control instruction is output to switch the charging path of the charge pump charging system to charging path (4-1) or charging path (4-2).

In charging path (4-1), the batteries are charged through the high-voltage voltage-divided charging unit and the low-voltage voltage-divided charging unit in sequence; and the batteries are connected in parallel.

In charging path (4-1), the batteries are charged through the high-voltage voltage-divided charging unit; and the batteries are connected in series; a battery voltage is determined according to the state information; the batteries are charged through a high-voltage voltage-divided charging unit and a low-voltage voltage-divided charging unit in sequence; and the batteries are connected in parallel.

In some embodiments, the battery pack includes two batteries, the low-voltage voltage-divided charging unit is a low-voltage bi-voltage-divided charging unit (2:1 charging unit), and the high-voltage voltage-divided charging unit is a high-voltage bi-voltage-divided charging unit (4:2 charging unit). In response to a determination that the charger is of the type of a high-voltage charger and the charging cable is of the type of a low-power cable, S1224 is performed to further determine the power consumption of the load; and in response to the power consumption of the load is low, the charging path (4-1) is switched to, in which, the batteries are charged through the high-voltage voltage-divided charging unit and the low-voltage voltage-divided charging unit in sequence, and the batteries are connected in parallel to improve the charging efficiency and speed. Alternatively, charging path (4-2) is switched to, in which, the high-voltage voltage-divided charging unit is first employed to charge the dual-cells connected in series, and at the same time the voltages of the batteries are detected; in response to a satisfaction of the voltage of the first battery or the second battery with the second preset condition, the charging path is switch such that the batteries are charged through the high-voltage voltage-divided charging unit and the low-voltage voltage-divided charging unit in sequence, and the connection of the batteries is switched to parallel connection, thus avoiding the raise in difference of the voltages of the two batteries and improving the charging efficiency and speed. The preset condition can be that one of the batteries is fully charged or the load becomes heavy for a long time (which can be determined by the battery voltage threshold and the duration threshold).

As shown in FIG. 7, in some embodiments, the operation flow of the charging system includes the following operations A101 through A406.

AtA101, a charger is plugged in and a charging capacity of the charger is read. For example, a circuit for charging can detect the type of the charger through a detection module.

At A102, a determination is performed as to whether the charger is a high-voltage charger. In some embodiments, a first type of charger is a low-voltage charger and a second type of charger is a high-voltage charger.

AtA103, in response to a determination that the charger is the high-voltage charger, a type of a charging cable is determined by the detection module (whether the cable is a low-power cable or not).

At A203, in response to a determination that the charger is of the type of a low-voltage charger, the charging switching unit module and the battery pack switching submodule are operated by the charging control module, and the charging is switched to a 2:1 charging unit (low-voltage bi-voltage-divided charging unit), and the connection of the batteries is switched to a parallel connection.

At A104, in response to a determination that the charging cable is of the type of a low-power cable, a magnitude of power consumption of load is determined by the detection module (whether the power consumption of load is high or not).

At A304, in response to a determination that the charging cable is of the type of a high-power cable, the charging unit switching submodule and the battery pack switching submodule are operated by the charging control module, and the connection of the cells is switched to a parallel connection, and the charging unit is switched to a 2:1 unit (low-voltage bi-voltage-divided charging unit).

At A105, in response to a determination that the power consumption of the load is high, the charging unit switching submodule and the battery pack switching submodule are operated by the charging control module, and the connection of the cells is switched to parallel connection, and the charging unit is switched to a 4:1 unit (high-voltage quarter-voltage-divided charging unit).

At A405, in response to a determination that the power consumption of the load is low, the charging unit switching submodule and the battery pack switching submodule are operated by the charging control module, and the connection of the cells is switched to series connection, and the charging unit is switched to a 4:2 unit (high-voltage bi-voltage-divided charging unit).

At A406, the voltage of the first cell (the cell supplying power to the load) is determined by the detection module, and the first cell is compensated and charged synchronously by the 2:1 charging unit (the low-voltage bi-voltage-divided charging unit). Operation A104 can also be repeatedly performed to dynamically adjust the charging path.

According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

An embodiment of the present disclosure provides an electronic device, which includes a memory, a processor, and a computer program stored in the memory and executable on the processor which, when is executed by the processor, causes the processor to carry out any of the methods as described above.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

It should be noted that the electronic device in this embodiment can be implemented as the electronic device in the system architecture of the embodiment shown in FIGS. 1, 2 or 6. In addition, the electronic device in this embodiment can perform the method for charging in the embodiment shown in FIG. 3 or FIG. 10. That is, the electronic device in this embodiment, the electronic device in the system architecture of the embodiment shown in FIGS. 1, 2 or 6, and the method for charging in the embodiment shown in FIG. 3 or FIG. 10 shall the same inventive concept, so these embodiments have the same implementation principle and technical effect, and which will not be described in detail here.

Non-transitory software programs and instructions of the method for charging in any one of the above embodiments are stored in a memory which, when executed by a processor, cause the processor to carry out the method for charging in any one of the above embodiments, for example, the above-described operations S1100 to S1200 described in conjunction with FIG. 8, S1100 to S1212 described in conjunction with FIG. 9, S1100 to S1223 described in conjunction with FIG. 10, 51100 to S1225 described in conjunction with FIG. 11, or S1100 to S1226 described in conjunction with FIG. 12.

An embodiment of the present disclosure provides a computer-readable storage medium storing a computer-executable instruction which when executed by a processor, causes the processor to carry out any one of the methods as described above.

An embodiment of the present disclosure provides a computer-readable storage medium, which stores computer-executable instructions which, when executed by at least one processor or controller, e.g., the processor of the system 100, causes the processor to carry out the operations of the method described above, for example, the above-described operations S1100 to S1200 described in conjunction with FIG. 8, S1100 to S1212 described in conjunction with FIG. 9, S1100 to S1223 described in conjunction with FIG. 10, 51100 to S1225 described in conjunction with FIG. 11, or S1100 to S1226 described in conjunction with FIG. 12.

According to an aspect of the present disclosure, an embodiment provides a circuit for charging, which includes, a detection module configured to detect state information of a charge pump charging system; a charging control module, having an input end connected with an output end of the detection module, and configured to output a corresponding control instruction according to the state information; and a switching module configured to receive the control instruction from the charging control module and to switch a charging path of the charge pump charging system. According to an embodiment of the present disclosure, the state information of the charge pump charging system is detected, and the charging path of the charge pump charging system is switched based on the state information. As such the charging system can make corresponding circuit switching according to the change of the state of the charging system during charging, and select a relatively better charging path and charging scheme for charging, so as to better meet the user requirements of fast charging and high charging efficiency.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

The above is a description of some embodiments of the present disclosure, but the embodiments of the present disclosure are not limited to the above-mentioned embodiments, and those having ordinary skills in the art can make various equivalent modifications or alternations without departing from the scope of the present disclosure, those equivalent modifications or alternations fall within the scope defined by the claims of the present disclosure.

## Claims

1. A circuit for charging comprising,
a detection module configured to detect state information of a charge pump charging system;
a charging control module, having an input end connected with an output end of the detection module, and being configured to output a corresponding control instruction according to the state information; and
a switching module configured to receive the control instruction from the charging control module and to switch a charging path of the charge pump charging system.

2. The circuit as claimed in claim 1, wherein the state information comprises at least one of,
type of charger, type of charging cable, power consumption of load, or state of battery voltage.

3. The circuit as claimed in claim 1, wherein the switching module comprises at least one of,
a charging unit switching submodule configured to switch a connection path of a charging unit according to the control instruction; or
a battery pack switching submodule configured to switch a connection scheme of a plurality of batteries according to the control instruction.

4. The circuit as claimed in claim 3, wherein the charging unit switching submodule comprises,
a plurality of different types of charging units each configured for voltage conversion; and
a plurality of switches, wherein, a switch of the plurality of switches has an end connected with the charger and another end connected with the charging unit; or
the switches are connected with different types of charging units; or
a switch of the plurality of switches has an end connected with a charging unit of the plurality of different types of charging units, and another end connected with one of the batteries; and each of the switches is configured to be switched to an activated state or a deactivated state according to the control instruction from the charging control module, to switch the connection path of a respective one of the charging units.

5. The circuit as claimed in claim 4, wherein the plurality of different types of charging units comprise a low-voltage voltage-divided charging unit and a high-voltage voltage-divided charging unit; the plurality of the switches comprise a first switch, a second switch, a third switch, a fourth switch and a fifth switch; and
the first switch has an end connected with the charger, and has another end connected with an input end of the high-voltage voltage-divided charging unit; the second switch has an end connected with an output end of the high-voltage voltage-divided charging unit, and has another end connected with one of the batteries; the third switch is connected between the output end of the high-voltage voltage-divided charging unit and an input end of the low-voltage voltage-divided charging unit; the fourth switch has an end connected with the charger, and has another end connected with the input end of the low-voltage voltage-divided charging unit; and the fifth switch has an end connected with an output end of the low-voltage voltage-dividing charging unit, and has another end connected with one of the batteries.

6. A method for charging comprising,
acquiring state information of a charge pump charging system; and
outputting, according to the state information, a corresponding control instruction to switch a charging path of the charge pump charging system.

7. The method as claimed in claim 6, wherein,
the state information comprises at least one of, type of charger, type of charging cable, power consumption of load, or state of battery voltage; and
switching the charging path of the charge pump charging system comprises at least one of, switching a connection path of a charging unit, or switching a connection scheme of the batteries.

8. The method as claimed in claim 7, wherein outputting the control instruction to switch the charging path of the charge pump charging system according to the state information comprises,
performing a determination as to the type of the charger according to the state information;
in response to a determination that the charger is of the type of a low-voltage charger, outputting a control instruction to switch the charging path of the charge pump charging system to a path in which, charging is performed by means of a low-voltage voltage-divided charging unit; and the batteries are connected in parallel.

9. The method as claimed in claim 7, wherein outputting the control instruction to switch the charging path of the charge pump charging system according to the state information comprises,
performing a determination as to the type of the charger according to the state information;
in response to a determination that the charger is of the type of a high-voltage charger, performing a further determination as to the type of the charging cable according to the state information; and
in response to a determination that the charging cable is of the type of a high-power cable, outputting a control instruction to switch the charging path of the charge pump charging system to a path in which, charging is performed by means of a low-voltage voltage-divided charging unit; and the batteries are connected in parallel.

10. The method as claimed in claim 9, wherein after performing the determination as to the type of the charging cable according to the state information, the method further comprises,
in response to a determination that the charging cable is of the type of a low-power cable, performing a further determination as to the power consumption of the load according to the state information;
in response to a determination that the power consumption of the load is low, outputting a control instruction to switch the charging path of the charge pump charging system to a path in which, charging is performed by means of a high-voltage voltage-divided charging unit; wherein the batteries are connected in series; and the low-voltage voltage-divided charging unit is employed to compensate and charge a battery in the plurality of batteries that supplies power to the load; or,
in response to a determination that the power consumption of the load is low, outputting a control instruction to switch the charging path of the charge pump charging system to a path in which, charging is performed by means of the high-voltage voltage-divided charging unit; wherein the batteries are connected in series;
performing a further determination as to a battery voltage according to the state information; and
compensating and charging the battery in the plurality of batteries that supplies power to the load by means of the low-voltage voltage-divided charging unit, according to the battery voltage.

11. The method as claimed in claim 9, wherein after performing the determination as to the type of the charging cable according to the state information, the method further comprises,
in response to a determination that the charging cable is of the type of a low-power cable, performing a further determination as to the power consumption of the load according to the state information;
in response to a determination that the power consumption of the load is high, outputting a control instruction to switch the charging path of the charge pump charging system to a path in which, charging the batteries through a high-voltage voltage-divided charging unit and a low-voltage voltage-divided charging unit in sequence; wherein the batteries are connected in parallel;
or, in response to a determination that the power consumption of the load is high, outputting a control instruction to switch the charging path of the charge pump charging system to a path in which, charging is performed by means of the high-voltage voltage-divided charging unit; wherein the batteries are connected in series;
performing a further determination as to a battery voltage according to the state information; and
charging the batteries through the high-voltage voltage-divided charging unit and the low-voltage voltage-divided charging unit in sequence according to the battery voltage; wherein the batteries are connected in parallel.

12. An electronic device, comprising a memory, a processor and a computer program stored in the memory and executable by the processor which, when executed by the processor causes the processor to carry out the method as claimed in any one of claim 5 to claim 11.

13. A computer-readable storage medium storing a computer-executable instruction which when executed by a processor, causes the processor to carry out the method as claimed in any one of claims 5 to 11.
